# EUROPEAN PATENT APPLICATION

(11) **EP 4 659 869 A1**
(43) Date of publication of application: **10.12.2025**
(21) Application number: 23932145.8
(22) Date of filing: 22.11.2023
(51) Int. Cl.: B05B 15/00, B05B 12/00, B05D 1/02, B05D 5/00, F03D 1/06, F03D 80/00

(54) **PROTECTIVE LAYER CONSTRUCTION DEVICE AND CONTROL METHOD FOR PROTECTIVE LAYER CONSTRUCTION DEVICE**

(30) Priority: 07.04.2023 JP 2023062704
(71) Applicant: Mitsubishi Heavy Industries, Ltd., Tokyo 100-8332 (JP)
(72) Inventor: SHIBATA, Masaaki, Tokyo 100-8332 (JP); TAKAYANAGI, Kazufumi, Tokyo 100-8332 (JP); KOREMATSU, Yasuhiro, Tokyo 100-8332 (JP); OKANO, Yasushi, Tokyo 100-8332 (JP); YAMADA, Tomokazu, Tokyo 100-8332 (JP)
(74) Representative: Cabinet Beau de Loménie
(86) International application number: PCT/JP2023/041922
(87) International publication number: WO 2024/209736

(57) **Abstract**

In the present invention, the accuracy of work to construct a protective layer is improved. This protective layer construction device comprises: a material injector (110) that injects, from an injection port (111), an injection frame (112) that includes a construction material; a movement mechanism that moves the material injector (110) in a prescribed scanning direction; a distance sensor (120) is installed in the movement mechanism in a state in which a prescribed distance (D) from the material injector (110) is maintained, is moved in the scanning direction, and contactlessly measures the distance from a blade surface (A); and a control unit that controls the distance (H) between the injection port (111) of the material injector (110) and the blade surface (A) on the basis of a measured distance (H') acquired by the distance sensor (120). The prescribed distance (D) is determined on the basis of an injection angle (θ) of the injection frame (112) and a set distance between the injection port (111) and the blade surface (A).

## Description

### Technical Field

The present disclosure relates to a protective layer construction device and a control method for a protective layer construction device.

### Background Art

For example, in a wind turbine, as a wind turbine rotor rotates, a wind turbine blade collides with foreign substances (for example, raindrops, dust, and the like) in the air and is eroded, so that erosion occurs on a leading edge side of the wind turbine blade. In order to protect the wind turbine blade from the erosion, it is known to form a protective layer for erosion resistance on a leading edge portion of the wind turbine blade (refer to PTL 1).

### Citation List

### Patent Literature

[PTL 1] Japanese Unexamined Patent Application Publication No. 2022-175830

### Summary of Invention

### Technical Problem

When forming the leading edge protective layer of the wind turbine blade, it is conceivable to construct (form) the protective layer by spraying a construction material onto the wind turbine blade while moving a material injector along a scanning direction. Here, the material injector sprays the construction material onto a blade surface by using a transport gas to form the protective layer.

When constructing the protective layer, it is preferable to keep a distance between an injection port of the material injector and the blade surface constant in order to uniformly form a thickness of the protective layer. However, when a distance sensor using a beam such as a laser light tries to measure a vertical distance between the blade surface and the injection port, the beam irradiated from the distance sensor is diffused by fine particles of the transport gas or the construction material injected from the material injector, and thus there is a problem in that a measurement accuracy of the distance sensor is lowered. A decrease in the measurement accuracy of the distance sensor leads to a decrease in the accuracy of the protective layer construction work.

The present disclosure has been made in view of such circumstances, and an object of the present disclosure is to provide a protective layer construction device and a control method for a protective layer construction device, which can improve the accuracy of protective layer construction work.

### Solution to Problem

A protective layer construction device according to an aspect of the present disclosure is a protective layer construction device that forms a protective layer on a blade surface of a wind turbine blade main body formed of an FRP, the protective layer construction device including: a material injector that injects an injection flame including a construction material from an injection port; a movement mechanism that moves the material injector along a predetermined scanning direction; a distance sensor that is installed in the movement mechanism in a state of maintaining a predetermined distance between the material injector and the distance sensor, is moved along the scanning direction, and measures a distance from the blade surface in a non-contact manner; and a control unit that controls a distance between an injection port of the material injector and the blade surface, based on a measurement distance acquired by the distance sensor, in which the predetermined distance is determined based on an injection angle of the injection flame and a set distance between the injection port and the blade surface.

A control method for a protective layer construction device according to an aspect of the present disclosure is a control method for a protective layer construction device that forms a protective layer on a blade surface of a wind turbine blade main body formed of an FRP by injecting an injection flame including a construction material from an injection port of a material injector, the control method including: a step of moving the material injector along a predetermined scanning direction; a step of moving a distance sensor along the scanning direction in a state of maintaining a predetermined distance between the material injector and the distance sensor, and measuring a distance from the blade surface in a non-contact manner; and a step of controlling a distance between the injection port of the material injector and the blade surface according to a measurement distance acquired by the distance sensor, in which the predetermined distance is determined based on an injection angle of the injection flame and a set distance between the injection port and the blade surface.

### Advantageous Effects of Invention

According to the protective layer construction device and the control method for a protective layer construction device of the present disclosure, an effect of improving the accuracy of the protective layer construction work can be achieved. Brief Description of Drawings

Fig. 1 is a schematic configuration diagram showing a wind power generation device using a wind turbine blade according to an embodiment of the present disclosure.
Fig. 2 is a plan view showing the wind turbine blade according to an embodiment of the present disclosure.
Fig. 3 is a front view of the wind turbine blade of Fig. 2.
Figs. 4A and 4B are cross-sectional views of the wind turbine blade shown in Figs. 2 and 3.
Fig. 5 is a front view showing a state of installation of the wind turbine blade when a protective layer is formed.
Fig. 6 is a cross-sectional view at a support position in Fig. 5.
Fig. 7 is a partially enlarged front view showing a formation range of the protective layer formed at a tip of the wind turbine blade.
Fig. 8 is a partially enlarged front view showing the order of forming the protective layer.
Fig. 9 is a partially enlarged cross-sectional view showing a forming direction of the protective layer in a blade thickness direction according to an embodiment of the present disclosure.
Fig. 10 is a diagram showing a schematic configuration of a protective layer construction device according to an embodiment of the present disclosure.
Fig. 11 is a view showing a relative positional relationship between a material injector and a distance sensor according to an embodiment of the present disclosure. Description of Embodiments

Hereinafter, an embodiment according to the present disclosure will be described with reference to the drawings.

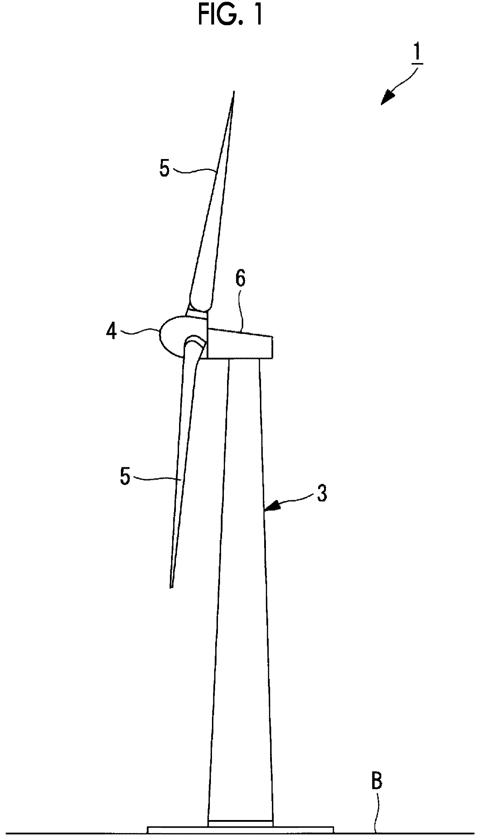

As shown in Fig. 1, a wind power generation device 1 has a tower 3 that is erected on an installation surface B, a nacelle 6 that is installed at an upper end of the tower 3, and a rotor head 4 that is rotatable around a substantially horizontal axis and that is provided in the nacelle 6.

A plurality of (for example, three) wind turbine blades 5 are attached to the rotor head 4 radially around a rotation axis thereof. Accordingly, the force of the wind that hits the wind turbine blade 5 in the direction of the rotation axis of the rotor head 4 is changed into power for rotating the rotor head 4 around the rotation axis. The obtained power is converted into electric power by a generator (not shown) and is supplied to the outside.

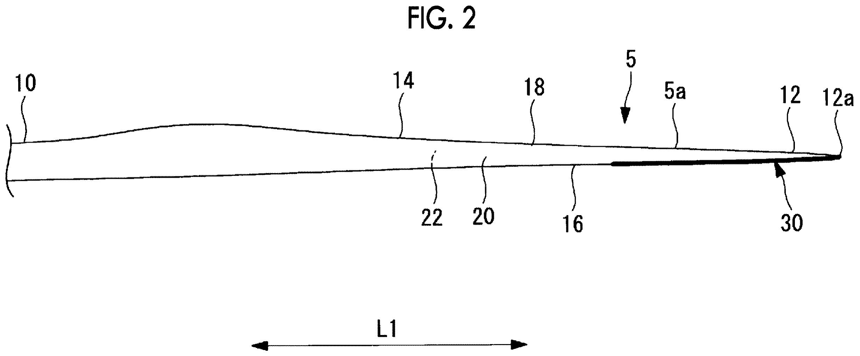

As shown in Fig. 2, the wind turbine blade 5 includes a blade root portion 10 that is attached to the rotor head 4, a blade tip portion (tip portion) 12 that is located farthest from the rotor head 4, and an airfoil portion 14 that extends between the blade root portion 10 and the blade tip portion 12. In Fig. 2, a blade length direction L1 is a horizontal direction.

The wind turbine blade 5 has a leading edge 16 and a trailing edge 18 from the blade root portion 10 to the blade tip portion 12. An outer shape of the wind turbine blade 5 is defined by a pressure-side surface 20 that is a pressure surface (positive pressure surface) and a suction-side surface 22 that is a negative pressure surface facing the pressure-side surface 20. The wind turbine blade 5 is formed of fiber-reinforced plastic (FRP). As the FRP, carbon fiber reinforced plastic (CFRP), glass fiber reinforced plastic (GFRP), or the like is used. An entire length of the wind turbine blade 5 from the blade root portion 10 to the blade tip portion 12 is 100 m class, for example, 80 m or more and 150 m or less. A wind turbine blade of 200 m class may be adopted as the wind turbine blade 5 of the present embodiment.

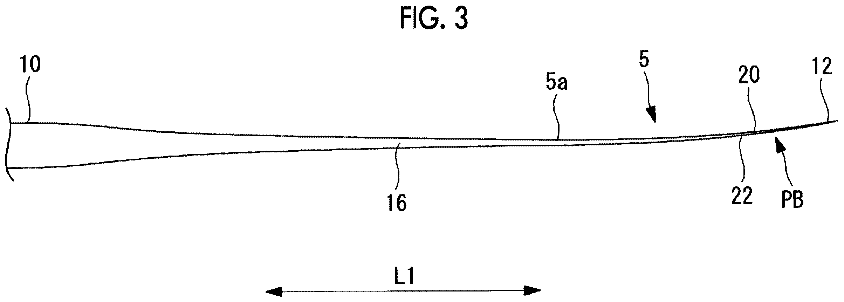

As shown in Fig. 3, the wind turbine blade 5 is provided with a pre-bend PB that is bent in advance on a blade tip portion 12 side. A bending amount of the pre-bend PB is determined in advance on the assumption that the wind turbine blade 5 receives a wind pressure during operation. Therefore, the pre-bend PB is bent such that the pressure receiving pressure-side surface 20 that receives the wind pressure and the suction-side surface 22 is protruded.

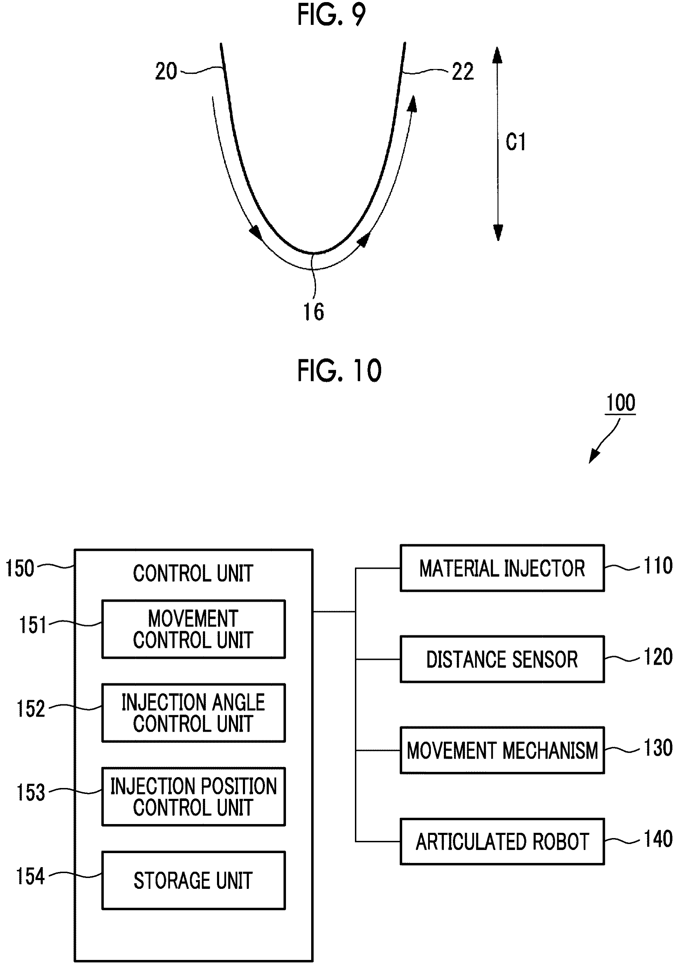

As shown in Fig. 2, a protective layer 30 is formed with respect to a wind turbine blade main body 5a in the blade tip portion 12 of the wind turbine blade 5 and in a predetermined region (leading edge portion) including the leading edge 16. The protective layer 30 is formed by a protective layer construction device 100 that is moved by a movement mechanism 130 (refer to Fig. 10) to be described later. A formation range of the protective layer 30 is indicated by a thick line in Fig. 2.

The formation range of the protective layer 30 in the blade length direction L1 is approximately 30% of the entire length of the wind turbine blade 5 from the blade root portion 10 to the blade tip portion 12, and for example, in the case of a wind turbine of 100 m class, the formation range from the tip 12a of the blade tip portion 12 is 20 m to 40 m, preferably about 30 m. The formation range of the protective layer 30 is not limited thereto, and for example, in a region where a circumferential speed exceeds 90 m/s, the formation range is set to a range of about 1/3 of the entire length from the tip of the wind turbine blade 5.

The protective layer 30 is made of a material having excellent wear resistance, such as a cermet or a Co (cobalt) alloy such as Co base alloy. The protective layer 30 is formed, for example, by high velocity oxy-fuel (HVOF).

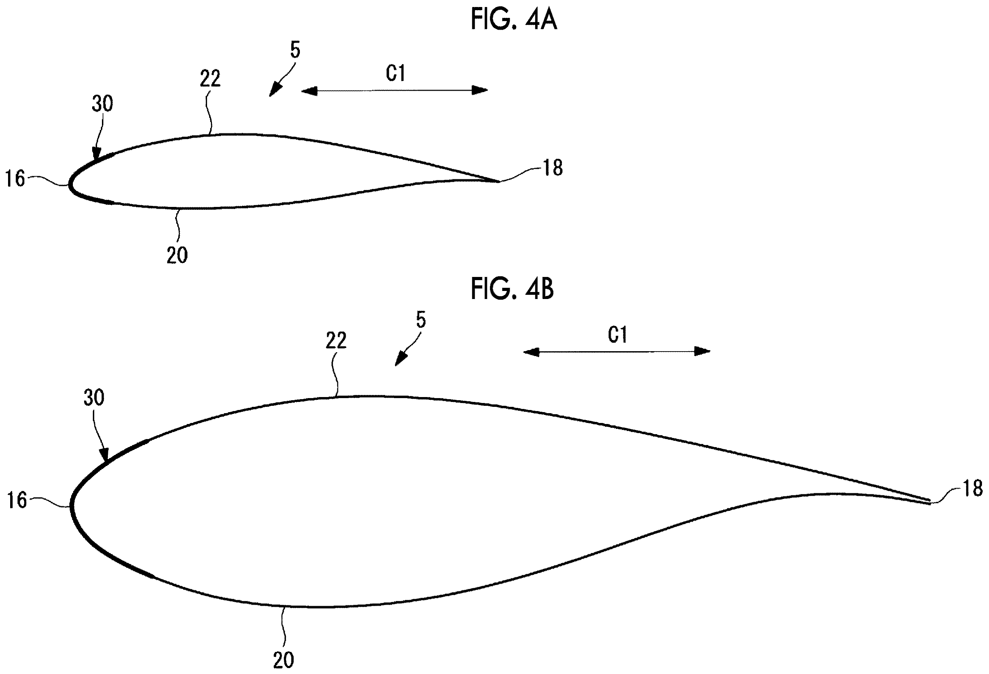

Figs. 4A and 4B show cross sections of the wind turbine blade 5. In the drawing, the horizontal direction indicates a blade chord direction (a code direction) C1. In a case where the entire length of the wind turbine blade 5 is R, Fig. 4A is a cross section at a position of 0.9R, and Fig. 4B is a cross section at a position of 0.7R.

The blade chord length (chord length) c in the cross section of Fig. 4A is about 1 m. A blade thickness ratio t/c in a case where a maximum thickness of the blade thickness is t is 18%.

The blade chord length c in the cross section of Fig. 4B is about 2 m, and the blade thickness ratio t/c is 25%.

As shown by thick lines in Figs. 4A and 4B, the protective layer 30 is formed from the pressure-side surface 20 to the suction-side surface 22 with the leading edge 16 interposed therebetween. The formation range of the protective layer 30 is determined in consideration of erosion of the wind turbine blade 5 due to raindrops or the like.

Next, a step of forming the protective layer 30 described above will be described.

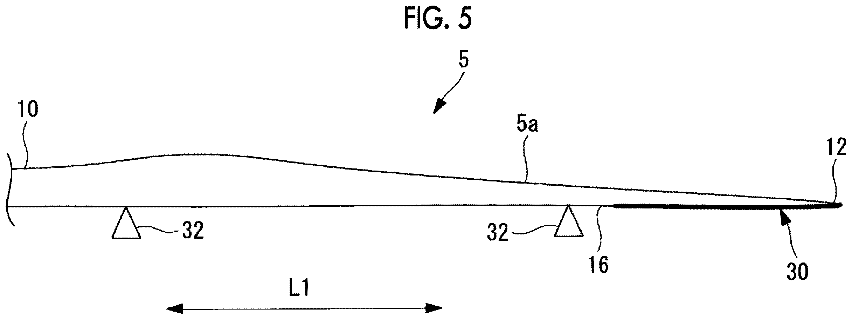

As shown in Fig. 5, after the outer shape of the wind turbine blade main body 5a of the wind turbine blade 5 is molded, the wind turbine blade 5 is installed in a posture in which the blade length direction L1 is substantially horizontal and the leading edge 16 faces downward (posture setting step). That is, the wind turbine blade main body 5a is installed in a vertical posture so that the blade chord direction C1 faces a substantially vertical direction. At this time, the wind turbine blade 5 is supported from below by a plurality of support platforms 32 provided at predetermined intervals in the blade length direction L1 (supporting step).

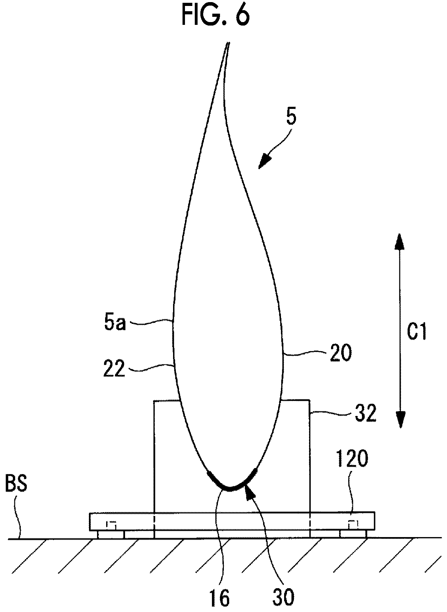

Fig. 5 shows that a leading edge 16 side of the wind turbine blade 5 is supported by the plurality of support platforms 32. Each support platform 32 is provided on an installation surface BS (refer to Fig. 6) at the time of construction. The wind turbine blade 5 may be supported with the leading edge 16 side facing downward. For example, instead of the method of supporting the wind turbine blade 5 from below by the support platform 32 described above, the wind turbine blade 5 may be supported by a hanging member such as a wire hung from above the wind turbine blade 5 to hold and lift the leading edge 16 facing downward.

As shown in Figs. 5 and 6, in a state where the leading edge 16 is directed downward, a protective layer is formed on the leading edge 16 of the wind turbine blade 5 by a protective layer construction device 100 (to be described later). The protective layer construction device 100 accelerates the construction material that is heated and melted or softened in a droplet or particle state by a transport gas and sprays the construction material onto the surface of the wind turbine blade main body 5a.

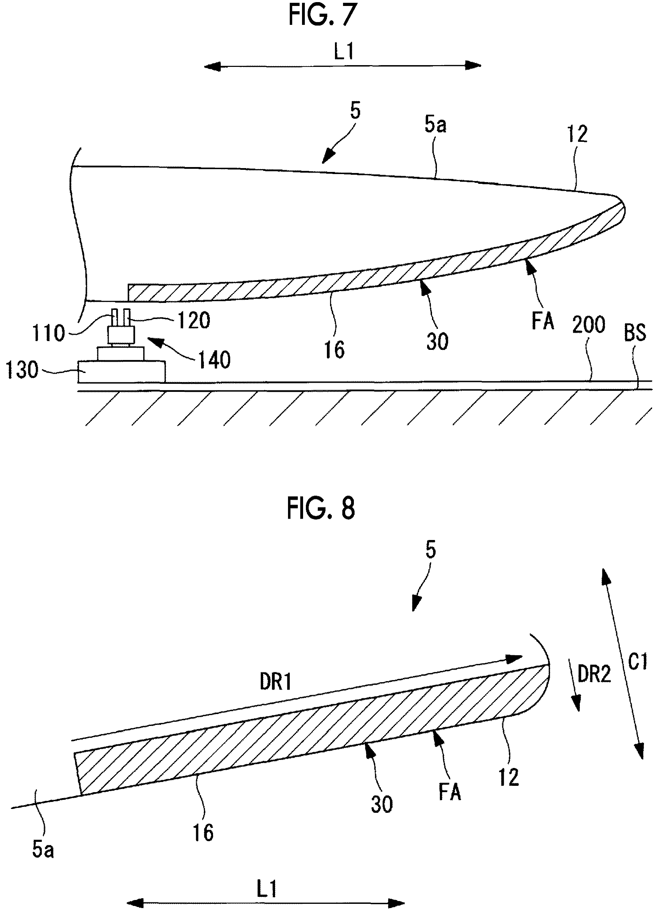

Fig. 7 shows a formation range FA in which the protective layer 30 is formed on the blade tip portion 12 of the wind turbine blade 5. As shown in the drawing, the protective layer 30 is formed in a predetermined range (leading edge portion) on the leading edge 16 side of the wind turbine blade 5.

As shown in Fig. 8, when the protective layer is formed, a material injector 110 (refer to Fig. 10) is reciprocated in the blade length direction L1 (direction indicated by "DR1" in the drawing) (first injecting step). As a result, the protective layers are laminated in a plurality of layers. A target thickness of the protective layer is, for example, about 500 µm to 600 µm. An irradiation width on the blade surface of the material injector 110 is, for example, about 10 mm.

After the first injecting step described above, the material injector 110 is moved by a predetermined distance in the blade chord direction C1 (direction indicated by "DR2" in the drawing) (blade chord position changing step), and the material injector 110 is reciprocated again in the blade length direction L1 (direction indicated by "DR1" in the drawing) at this position to perform injecting. In this way, the protective layer is laminated on the formation range FA by repeatedly performing a series of scanning consisting of reciprocating movement in the blade length direction L1 (first injecting step) and movement by a predetermined amount in the blade chord direction C1 (blade chord position changing step).

In the first injecting step, the protective layer is formed by scanning the material injector 110 to reciprocate in the blade length direction L1. This is because the change in curvature of the blade surface in the blade length direction L1 is smaller than that in the blade chord direction C1.

Fig. 9 is a partially enlarged cross-sectional view showing a forming direction of the protective layer in the blade chord direction C1. As shown in Fig. 9, the position change direction in the above-described blade chord position changing step is a direction from one blade surface (for example, the pressure-side surface 20 or the suction-side surface 22) of the wind turbine blade 5 to the other blade surface (for example, the suction-side surface 22 or the pressure-side surface 20) via the leading edge 16 as indicated by an arrow in the drawing.

Next, the protective layer construction device 100 of the present embodiment will be described.

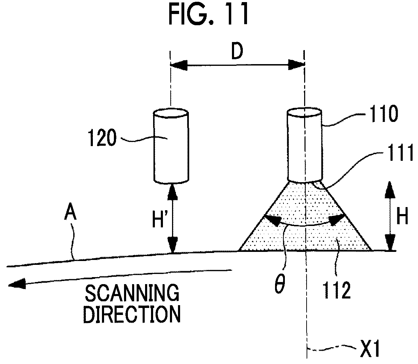

Fig. 10 is a diagram showing a schematic configuration of the protective layer construction device 100 according to the present embodiment. As described above, the protective layer construction device 100 forms (constructs) the protective layer in the tip portion of the wind turbine blade main body 5a formed of the FRP in the blade length direction and the formation range FA of the leading edge portion. Hereinafter, a surface of the wind turbine blade main body 5a on which the construction material is injected is referred to as a blade surface A (refer to Fig. 11).

As shown in Fig. 10, the protective layer construction device 100 includes a material injector 110, a distance sensor 120, a movement mechanism 130, an articulated robot 140, and a control unit 150.

Fig. 11 is a view showing a relative positional relationship between the material injector 110 according to the present embodiment and the distance sensor 120. As shown in Fig. 11, the material injector 110 injects the construction material from an injection port 111. The construction material injected from the injection port 111 forms an injection flame 112 centered on a reference axis X1, and forms the protective layer in a predetermined range on the blade surface A. The injection flame 112 is a combustion flame formed of an oxygen-containing oxidizer and a fuel. The material injector 110 injects the construction material while being moved along a scanning direction by a movement mechanism 130 to be described later. The scanning direction in the present embodiment is, for example, as described with reference to Figs. 8 and 9.

The distance sensor 120 measures the distance by irradiating, for example, the blade surface A of the wind turbine blade main body 5a with laser light (beam) and receiving reflected light reflected from the surface. The distance sensor 120 is not limited to this example. For example, the distance sensor 120 can appropriately adopt a known sensor such as a sensor that measures a distance using ultrasonic waves. The distance sensor 120 is installed in the movement mechanism 130, for example, in a state where a predetermined distance D is maintained from the material injector 110. Here, "being installed" includes not only a case of being directly installed but also a case of being indirectly installed via another member (for example, an articulated robot 140 or the like) as will be described later. The distance sensor 120 is moved along the scanning direction and measures the distance from the blade surface A in a non-contact manner. Specifically, the distance sensor 120 measures the distance between the distance sensor 120 and the blade surface A in advance of (before) the injection of the construction material by the material injector 110. Here, the blade surface A is not limited to whether the protective layer is already formed. That is, in a case of the first scanning, the blade surface A is the surface of the wind turbine blade main body 5a, and in a case of the multiple (for example, n-th) scanning, the blade surface A means the surface of the protective layer formed on the wind turbine blade main body 5a by the previous (n-1-th) scanning.

A measurement distance H' acquired by the distance sensor 120 is associated with the measurement position and is stored in a storage unit 154 (to be described later). Here, the measurement position is, for example, two-dimensional coordinate information in the formation range FA. That is, the storage unit 154 stores distance information in which the measurement distance H' acquired by the distance sensor 120 is associated with the coordinate position information in the formation range FA.

In the present embodiment, the material injector 110 and the distance sensor 120 are moved by a movement mechanism 130 and the articulated robot 140 (to be described later) in a state where a predetermined distance D is maintained therebetween. For example, the material injector 110 and the distance sensor 120 are attached to a tip arm of the articulated robot 140 in a state of being connected by a connecting member (not shown).

The distance sensor 120 is disposed to be located in front of the material injector 110 in the scanning direction when the protective layer is formed. That is, the distance sensor 120 measures the distance from the blade surface A at the position in front of the material injector 110 in the scanning direction by the distance D. Details of the distance D will be described later.

The movement mechanism 130 is, for example, a mechanism that moves the material injector 110 along the scanning direction as shown in Fig. 7. The movement mechanism 130 moves in the blade length direction L1 along, for example, a rail 200 installed on the installation surface BS at the time of construction. The position of the movement mechanism 130 in the blade length direction L1 is controlled by the control unit 150.

As shown in Fig. 7, the articulated robot 140 is a mechanism that is attached to the movement mechanism 130 and moves the material injector 110 and the distance sensor 120 to any position in the three-dimensional space. The articulated robot 140 adjusts, for example, an injection angle of the material injector 110, in other words, an inclination of the reference axis X1 in Fig. 11, the position of the material injector 110 and the distance sensor 120 in the blade thickness direction, and the distance between the injection port 111 and the blade surface A.

The control unit 150 controls the entire protective layer construction device 100. The control unit 150 is a computer, and includes, for example, a central processing unit (CPU, processor), a main memory, a secondary storage (memory), and the like. Further, the control unit 150 may include a communication unit for transmitting and receiving information to and from other devices.

The main memory is configured with, for example, a writable memory such as a cache memory or a random access memory (RAM), and is used as a work region performing reading of an execution program of the CPU, writing of processing data by the execution program, or the like.

The secondary storage is a non-transitory computer readable storage medium. The secondary storage is, for example, a magnetic disk, a magneto-optical disk, a CD-ROM, a DVD-ROM, a semiconductor memory, or the like.

The control unit 150 includes a movement control unit 151 that controls two-dimensional movement in the formation range FA of the material injector 110, an injection angle control unit 152 that adjusts the injection angle of the material injector 110, an injection position control unit 153 that performs position control in the direction of the reference axis X1 of the material injector 110 (injection port 111), and a storage unit 154 that stores data required for these controls.

As an example, a series of processes for implementing a function of each unit provided in the control unit 150 is stored in a secondary storage device in the form of a program, and the CPU reads the program into the main memory device and executes a process of processing and calculating information to implement various functions. The program may be applied in various forms, such as being installed in advance in a secondary storage, provided in a state of being stored in a computer readable storage medium, or distributed via communication means using wired or wireless methods. The computer-readable storage medium is a magnetic disk, a magneto-optical disk, a CD-ROM, a DVD-ROM, a semiconductor memory, or the like.

The movement control unit 151 gives a control command for moving the material injector 110 and the distance sensor 120 along a scanning path set in advance in the formation range FA, for example, to the articulated robot 140 and the movement mechanism 130.

The injection angle control unit 152 controls the inclination (injection angle) of the material injector 110 such that the injection direction (that is, the direction of the reference axis X1) of the material injector 110 coincides with the normal direction of the blade surface A, based on, for example, the curvature information of the formation range FA stored in the storage unit 154. The injection angle control unit 152 calculates, for example, the inclination angle based on the curvature information of the formation range FA, and gives a control command according to the calculated inclination angle to the articulated robot 140 to control the inclination of the material injector 110.

The injection position control unit 153 controls the distance between the injection port **111** and the blade surface A based on the measurement distance H' measured by the distance sensor 120. Specifically, the injection position control unit 153 acquires the measurement distance H' corresponding to a current position of the material injector 110 (two-dimensional coordinate position in the formation range FA) from the distance information stored in the storage unit 154, and controls the position of the injection port 111 on the reference axis X1 such that the distance between the injection port **111** and the blade surface A is a predetermined set distance Href, based on the acquired measurement distance H'. In this way, by controlling the distance between the injection port 111 and the blade surface A to be constant at the predetermined set distance Href, it is possible to form the protective layer having a uniform thickness in the formation range FA.

Considering the margin, the position of the injection port 111 may be controlled such that the distance between the injection port **111** and the blade surface A falls within an allowable range (Href - α ≦ H' ≦ Href + α) obtained by adding a predetermined margin (±α, for example, several percent) to the set distance Href.

For example, the injection position control unit 153 determines whether the measurement distance H' acquired from the storage unit 154 is within the allowable range (Href - α ≦ H' ≦ Href + α), does not perform the position adjustment of the material injector 110 in the direction of the reference axis X1 when the measurement distance H' is within the allowable range, and performs the position adjustment of the material injector 110 in the direction of the reference axis X1 in a direction in which the error is reduced, more specifically, in a direction in which the error becomes zero, based on the error between the measurement distance H' and the set distance Href when the measurement distance H' exceeds the allowable range.

Next, the distance D between the material injector 110 and the distance sensor 120 will be described.

The distance D between the distance sensor 120 and the material injector 110 is determined based on the injection angle θ of the injection flame 112 and the set distance Href between the injection port 111 and the blade surface A. Here, the injection angle θ is a central angle of a longitudinal cross section of the injection flame 112 injected from the injection port 111 of the material injector 110, as shown in Fig. 11. For example, the range of the injection flame 112 injected from the injection port 111 can be calculated by using the injection angle θ and the set distance Href. The distance D is set to a distance at which the laser light irradiated from the distance sensor 120 does not overlap with the injection flame 112.

By setting the distance D in this way, it is possible to suppress the influence of the injection flame 112 on the laser light (beam) emitted from the distance sensor 120. Accordingly, it is possible to improve the measurement accuracy of the distance sensor 120.

According to the protective layer construction device 100 having such a configuration, the movement mechanism 130 and the articulated robot 140 are controlled by the control unit 150, so that the material injector 110 and the distance sensor 120 are moved along a predetermined scanning path while maintaining the constant distance D. The inclination of the material injector 110 is controlled by the control unit 150 controlling the articulated robot 140 such that the reference axis X1 of the material injector 110 coincides with the normal direction of the blade surface A.

While the material injector 110 moves, the injection flame 112 is injected from the injection port 111 of the material injector 110, and the protective layer is formed on the blade surface A. During the protective layer forming period, the distance measurement is performed by the distance sensor 120 in front of the material injector 110, and the position control of the injection port 111 in the direction of the reference axis X1 is performed based on the measurement distance H'. Accordingly, it is possible to form a uniform protective layer on the blade surface A.

As described above, according to the protective layer construction device 100 and the control method for a protective layer construction device of the present embodiment, the following actions and effects are obtained.

That is, the protective layer construction device 100 of the present embodiment includes the material injector 110 that injects the injection flame 112 including the construction material from the injection port 111, the movement mechanism 130 that moves the material injector 110 along a predetermined scanning direction, the distance sensor 120 that is installed in the movement mechanism 130 in a state of maintaining the predetermined distance D from the material injector 110, that is moved along the scanning direction, and that measures the distance from the blade surface A in a non-contact manner, and the control unit 150 that controls the distance H between the injection port **111** of the material injector 110 and the blade surface A based on the measurement distance H' acquired by the distance sensor 120. In this case, the predetermined distance D is determined based on the injection angle θ of the injection flame 112 and the set distance Href between the injection port 111 and the blade surface A.

Accordingly, the influence of the fine particles of the transport gas or the construction material injected from the material injector 110 on the distance measurement of the distance sensor 120 can be suppressed. As a result, it is possible to improve the measurement accuracy of the distance sensor 120, and it is possible to improve the accuracy of the protective layer construction work.

### [Other Embodiments]

In the protective layer construction device 100 of the present embodiment, the distance sensor 120 is disposed in front of the material injector 110 in the scanning direction, but the disposition of the distance sensor 120 with respect to the material injector 110 is not limited to this example. That is, the distance sensor 120 may be provided with the distance D secured between the distance sensor 120 and the material injector 110 and may be capable of measuring the distance between the distance sensor 120 and the blade surface in the scanning direction. For example, the material injector 110 and the distance sensor 120 may be disposed side by side in a direction orthogonal to the scanning direction when the protective layer is formed. With such a disposition, the scanning path adjacent to the scanning path in which the material injector 110 currently moves, in other words, the distance measurement of the scanning path in which the material injector 110 next forms the protective layer is performed. In a case where such a disposition is provided, the material injector 110 moves outside the formation range FA during a period in which distance measurement is performed on the first scanning path. Therefore, the injection of the construction material by the material injector 110 is stopped.

In the protective layer construction device 100 of the present embodiment, the distance information in which the measurement distance H' measured by the distance sensor 120 is associated with the coordinate information on the blade surface A is stored in the storage unit 154, and the position control of the material injector 110 on the reference axis is performed by using the distance information, but the present disclosure is not limited to this control method. For example, the injection position control unit 153 may estimate the distance H from the blade surface A at the coordinate position the material injector 110 on the blade surface A using the positional relationship between the distance sensor 120 and the material injector 110 and the measurement distance H' acquired by the distance sensor 120. Then, the injection position control unit 153 may control the distance between the injection port 111 of the material injector 110 and the blade surface A based on the estimated distance H.

The present disclosure has been described above with reference to the embodiments, but the technical scope of the present disclosure is not limited to the above-described embodiments. Various modifications or improvements can be made to the above-described embodiments without departing from the gist of the invention, and such modifications or improvements are also included in the technical scope of the present disclosure.

The protective layer construction device and the control method for a protective layer construction device described in each of the embodiments described above are understood as follows, for example.

A protective layer construction device (100) according to a first aspect of the present disclosure is a protective layer construction device (100) that forms a protective layer on a blade surface (A) of a wind turbine blade main body (5a) formed of an FRP, the protective layer construction device (100) including: a material injector (110) that injects an injection flame (112) including a construction material from an injection port (111); a movement mechanism (130) that moves the material injector along a predetermined scanning direction; a distance sensor (120) that is installed in the movement mechanism in a state of maintaining a predetermined distance (D) between the material injector and the distance sensor, is moved along the scanning direction, and measures a distance (H') from the blade surface in a non-contact manner; and a control unit (150) that controls a distance (H) between an injection port of the material injector and the blade surface, based on a measurement distance acquired by the distance sensor, in which the predetermined distance is determined based on an injection angle (θ) of the injection flame and a set distance (Href) between the injection port and the blade surface.

According to the protective layer construction device according to the first aspect of the present disclosure, the distance between the material injector and the distance sensor is determined based on the injection angle of the injection flame and the set distance between the injection port and the blade surface. Accordingly, the influence of the fine particles of the transport gas or the construction material injected from the material injector 110 on the distance measurement of the distance sensor can be suppressed. As a result, it is possible to improve the measurement accuracy of the distance sensor, and it is possible to improve the accuracy of the protective layer construction work.

In the first aspect, in the protective layer construction device according to a second aspect of the present disclosure, the distance sensor is a distance sensor that measures a distance by irradiating the blade surface with a beam and receiving the beam reflected from the blade surface, and the predetermined distance is set to a distance at which the emitted beam does not overlap with the injection flame.

According to the protective layer construction device according to the second aspect of the present disclosure, the distance between the material injector and the distance sensor is set to the distance at which the beam emitted from the distance sensor does not overlap with the injection flame. In this manner, the injection flame, in other words, it is possible to avoid or suppress the diffusion of the beam emitted from the distance sensor due to the fine particles of the transport gas or the construction material. Accordingly, it is possible to improve the measurement accuracy of the distance sensor, and it is possible to improve the accuracy of the protective layer construction work.

In the first or the second aspect, in the protective layer construction device according to a third aspect of the present disclosure, the distance sensor is disposed to be located in front of the material injector in the scanning direction when the protective layer is formed.

According to the protective layer construction device of the third aspect of the present disclosure, the distance sensor measures the distance from the blade surface at the position in front of the material injector by the predetermined distance when the protective layer is formed.

In the first or the second aspect, in the protective layer construction device according to a fourth aspect of the present disclosure, the material injector and the distance sensor are disposed side by side in a direction orthogonal to the scanning direction when the protective layer is formed.

According to the protective layer construction device according to the fourth aspect of the present disclosure, the distance from the blade surface is measured in the scanning path adjacent to the scanning path in which the material injector currently moves, in other words, in the scanning path in which the material injector 110 next forms the protective layer.

In any one of the first to fourth aspects, the protective layer construction device according to a fifth aspect of the present disclosure further including: a storage unit (154) that stores a coordinate position on the blade surface and a measurement distance acquired by the distance sensor in association with each other, in which the control unit acquires the measurement distance corresponding to the coordinate position of the material injector on the blade surface from the storage unit, and controls a distance between the injection port of the material injector and the blade surface based on the acquired measurement distance.

According to the protective layer construction device according to the fifth aspect of the present disclosure, the distance between the injection port of the material injector and the blade surface is controlled based on the measurement distance stored in the storage unit. Accordingly, a processing load can be reduced as compared with a case where the position from the blade surface is sequentially estimated from the position of the material injector using the measurement distance acquired by the distance sensor.

In any one of the first to fourth aspects, the protective layer construction device according to a sixth aspect of the present disclosure, the control unit estimates a distance of the material injector from the blade surface of a coordinate position on the blade surface using a positional relationship between the distance sensor and the material injector, and a measurement distance acquired by the distance sensor, and controls a distance between the injection port of the material injector and the blade surface based on the estimated distance.

According to the protective layer construction device according to the sixth aspect of the present disclosure, the position from the blade surface at the position of the material injector is sequentially estimated using the measurement distance acquired by the distance sensor. Accordingly, it is possible to reduce the storage capacity of the storage unit as compared to a case where the measurement distance acquired by the distance sensor is temporarily stored and the distance between the material injector and the blade surface is controlled using the stored measurement distance.

A control method for a protective layer construction device according to a seventh aspect of the present disclosure is a control method for a protective layer construction device (100) that forms a protective layer on a blade surface (A) of a wind turbine blade main body (5a) formed of an FRP by injecting an injection flame (112) including a construction material from an injection port (111) of a material injector (110), the control method including: a step of moving the material injector along a predetermined scanning direction; a step of moving a distance sensor (120) along the scanning direction in a state of maintaining a predetermined distance (D) between the material injector and the distance sensor, and measuring a distance from the blade surface in a non-contact manner; and a step of controlling a distance (H) between the injection port of the material injector and the blade surface according to a measurement distance (H') acquired by the distance sensor, in which the predetermined distance is determined based on an injection angle (θ) of the injection flame and a set distance (Href) between the injection port and the blade surface.

### Reference Signs List

1: wind power generation device
3: tower
4: rotor head
5: wind turbine blade
5a: wind turbine blade main body
6: nacelle
10: blade root portion
12: blade tip portion
12a: tip
14: airfoil portion
16: leading edge
18: trailing edge
20: pressure-side surface
22: suction-side surface
30: protective layer
32: support platform
100: protective layer construction device
110: material injector
111: injection port
112: injection flame
120: distance sensor
130: movement mechanism
140: articulated robot
150: control unit
151: movement control unit
152: injection angle control unit
153: injection position control unit
154: storage unit
200: rail

## Claims

1. A protective layer construction device that forms a protective layer on a blade surface of a wind turbine blade main body formed of an FRP, the protective layer construction device comprising:
a material injector that injects an injection flame including a construction material from an injection port;
a movement mechanism that moves the material injector along a predetermined scanning direction;
a distance sensor that is installed in the movement mechanism in a state of maintaining a predetermined distance between the material injector and the distance sensor, is moved along the scanning direction, and measures a distance from the blade surface in a non-contact manner; and
a control unit that controls a distance between an injection port of the material injector and the blade surface, based on a measurement distance acquired by the distance sensor,
wherein the predetermined distance is determined based on an injection angle of the injection flame and a set distance between the injection port and the blade surface.

2. The protective layer construction device according to Claim 1,
wherein the distance sensor is a distance sensor that measures a distance by irradiating the blade surface with a beam and receiving the beam reflected from the blade surface, and
the predetermined distance is set to a distance at which the emitted beam does not overlap with the injection flame.

3. The protective layer construction device according to Claim 1, wherein the distance sensor is disposed to be located in front of the material injector in the scanning direction when the protective layer is formed.

4. The protective layer construction device according to Claim 1, wherein the material injector and the distance sensor are disposed side by side in a direction orthogonal to the scanning direction when the protective layer is formed.

5. The protective layer construction device according to Claim 1, further comprising:
a storage unit that stores a coordinate position on the blade surface and a measurement distance acquired by the distance sensor in association with each other,
wherein the control unit acquires the measurement distance corresponding to the coordinate position of the material injector on the blade surface from the storage unit, and controls a distance between the injection port of the material injector and the blade surface based on the acquired measurement distance.

6. The protective layer construction device according to Claim 1, wherein the control unit estimates a distance of the material injector from the blade surface of a coordinate position on the blade surface using a positional relationship between the distance sensor and the material injector, and a measurement distance acquired by the distance sensor, and controls a distance between the injection port of the material injector and the blade surface based on the estimated distance.

7. A control method for a protective layer construction device that forms a protective layer on a blade surface of a wind turbine blade main body formed of an FRP by injecting an injection flame including a construction material from an injection port of a material injector, the control method comprising:
a step of moving the material injector along a predetermined scanning direction;
a step of moving a distance sensor along the scanning direction in a state of maintaining a predetermined distance between the material injector and the distance sensor, and measuring a distance from the blade surface in a non-contact manner; and
a step of controlling a distance between the injection port of the material injector and the blade surface according to a measurement distance acquired by the distance sensor,
wherein the predetermined distance is determined based on an injection angle of the injection flame and a set distance between the injection port and the blade surface.
